# EUROPEAN PATENT SPECIFICATION

(11) **EP 3 113 589 B1**
(45) Date of publication and mention of the grant of the patent: **19.12.2018**
(21) Application number: 14883239.7
(22) Date of filing: 06.06.2014
(51) Int. Cl.: H04M 1/18, H05K 5/06, G06F 1/16

(54) **WATER-PROOF STRUCTURE AND MOBILE PHONE USING SAME**
WASSERDICHTE STRUKTUR UND MOBILTELEFON DAMIT
STRUCTURE ÉTANCHE À L'EAU ET TÉLÉPHONE PORTABLE LA METTANT EN OEUVRE

(30) Priority: 24.02.2014 CN 201410061469
(43) Date of publication of application: 04.01.2017
(73) Proprietor: Power Idea Technology (Shenzhen) Co., Ltd., Shenzhen, Guangdong 518000 (CN)
(72) Inventor: GUO, Zhenyu, Shenzhen Guangdong 518000 (CN); MA, Jidong, Shenzhen Guangdong 518000 (CN); CHEN, Fanguo, Shenzhen Guangdong 518000 (CN)
(74) Representative: CMS Cameron McKenna Nabarro Olswang LLP
(86) International application number: PCT/CN2014/079384
(87) International publication number: WO 2015/123940

(56) References cited:
- EP-A1- 2 680 546
- CN-A- 101 808 486
- CN-U- 202 514 217
- CN-U- 202 634 516
- CN-U- 203 747 870
- JP-A- 2010 081 570
- US-A1- 2012 074 153

## Description

### FIELD

The subject matter herein generally relates to a waterproof structure, and a mobile phone using the same.

### BACKGROUND

In recent years, with the increase in people's outdoor activities, a variety of waterproof products (such as waterproof mobile phones) innovate and increase people's attention. The conventional waterproof structure of the waterproof mobile phone usually includes a first casing, soft rubber as the waterproof member, and a second casing. The second casing defines a groove, the soft rubber is assembled in the groove. The first casing and the second casing are assembled together with screws to press the waterproof soft rubber in the groove, and the waterproof soft rubber generates an extrusion deformation interference when pressed, the waterproof effect between the first casing and the second casing is accordingly achieved. In the aforementioned waterproof structure, the first casing is fixed to the second casing via a number of screws, the presence of screw fasteners requires a special space on the first casing and the second casing to allow for the screws, thus the sizes of the first casing and the second casing must be large. Simultaneously, the waterproof is achieved via that the soft rubber is pressed to be deformation interference by the locking force of the screws. That is, the waterproof structure is used such that, a number of points (namely, the positions where the screws are arranged) extrude the first casing and the second casing. Thus, the screws are required to be evenly distributed and the fastening force on the screws is required to be substantially the same. In that way, the deformation of the first casing and the second casing in the Y direction is controlled to be in a preset range and the waterproof soft rubber is ensured to generate an even deformation. However, because of manufacturing and assembly errors, the limitation of the casing structure, and nonuniform fastening forces, an even deformation of the waterproof soft rubber is difficult to achieve, reducing the waterproofing effect. In order to overcome the shortcoming of leaking and ensure a reliable waterproof effect, the only way is to arrange as many screws as possible between the first casing and the second casing to ensure the even exertion, for example if ten mobile phones are needed to be assembled, a substantial number of man-hours in a station of locking screws will be consumed, and consistency in the fastening of each screw is difficult to ensure, thus the waterproof effect is affected. Furthermore, in the waterproof manner that employs screws to fix the first casing and the second casing together, when the mobile phone has been used and knocked about for a long time, the locking force of the screws becomes smaller; if one or more screws become loose or are lost, the waterproof effect is lost anyway.

Another conventional waterproof structure is known from JP2010081570.

### SUMMARY OF THE INVENTION

In accordance with an aspect of the invention, there is provided a waterproof structure according to appended claim 1. Preferable features of the invention are defined in the appended dependent claims. The present disclosure provides a waterproof structure capable of reducing the size of a casing, simultaneously resolving a shortcoming that the waterproof effect is poor because the waterproof soft rubber is deformed unevenly by a number of points and uneven fastening force generated by the screws fasteners between the first casing and the second casing. In the present disclosure, great amounts of screwing are no longer required, and the problem of uneven fastening force of the screws fasteners between the first casing and the second casing is avoided.

The present disclosure also provides a mobile phone using the waterproofing structure of the embodiment capable of resolving a shortcoming that a waterproof effect is lost because a number of points and the uneven pressure forces between the first casing and the second casing, reducing a size of the first casing and the second casing, and resolving a problem of redundant processing of a great mount of screwing.

A waterproof structure includes a first casing, a waterproof pad, and a second casing. The waterproof pad is arranged between the first casing and the second casing. Two first guide grooves are defined in the first casing at portions closing to opposite sides of the first casing. Two second guide grooves are defined in the second casing at portions closing to opposite sides of the second casing. The waterproof structure further includes two pinch strips. Each pinch strip is engaged with one of first guide grooves and one of the second guide grooves to assemble the first casing, the waterproof pad, and the second casing together.

A mobile phone using the waterproof structure as aforementioned.

In the waterproof structure of this disclosure, the first casing and the second casing each define at least one guide groove, 5 the pinch strips engage with the guide grooves to lock the first casing to the second casing. As compared to the related art, a position for the casing locking screws is not needed, and a size of the guiding grooves is smaller than a size required for applying many screws fastener, thus a size of the casing is decreased. In the waterproof structure of the disclosure, the waterproof pad is deformed by an engagement between the pinch strips and the casing, and bears uniform pressure along the whole engagement length so as to produce a conforming fit across the engagement length between the first casing and the second casing, producing an even deformation. As compared to the manner in the related art that a number of screws locking at a number of positions to produce a number of forces, the forces on the casing are non-uniformly distributed across a length direction between the points, causing the waterproof pad to produce an uneven deformation. The waterproof effect provided by the disclosure is more reliable, and there is no existence of the problem that the waterproof effect is lost because of the screws fasteners becoming loose. The manner of engagement replaces the manner of fixing by screws fasteners, thus assembly is simpler. The waterproof structure of the present disclosure only needs the pinch strips to engage with the casing, as compared to the manner in the related art which require a number of screws to deform the soft rubber seal in the process of securing the casings, screwing time is saved and the assembly efficiency is improved. Simultaneously, in the related art, as much as possible to ensure the waterproof pad to be evenly deformed, the arrangement of the screws are required to be even and the locking force of the screws are required to be uniform, the disclosure preferably resolves this problem with a manner of engagement.

### BRIEF DESCRIPTION OF THE DRAWINGS

Implementations of the present technology will now be described, by way of example only, with reference to the attached figures, wherein:
FIG. 1 illustrates an exploded view of an embodiment of a waterproof structure.
FIG. 2 illustrates a view of a portion "O" of FIG. 1.
FIG. 3 illustrates a view of a portion "P" of FIG. 1.
FIG. 4 illustrates a view of a portion "R" of FIG. 1.
FIG. 5 illustrates a cross-sectional view taken along line A-A of FIG. 1.
FIG. 6 illustrates an isometric view of an embodiment of a limit baffle in the structure of FIG. 1.
FIG. 7 illustrates a semi-assembled isometric view of an embodiment of a waterproof structure.
FIG. 8 illustrates a cross-sectional view taken along line B-B of FIG. 1.
FIG. 9 illustrates a cross-sectional view taken along line C-C of FIG. 1.
FIG. 10 illustrates a view of a portion "S" of FIG. 9.

### DETAILED DESCRIPTION

For the purpose, technical solutions, and advantages of the present disclosure will become apparent below in conjunction with the accompanying drawings and specific embodiments of the present disclosure to further illustrate a waterproof structure of the present disclosure and the mobile phone using the waterproof structure.

Embodiments of the present disclosure will be described with reference to the accompanying drawings.

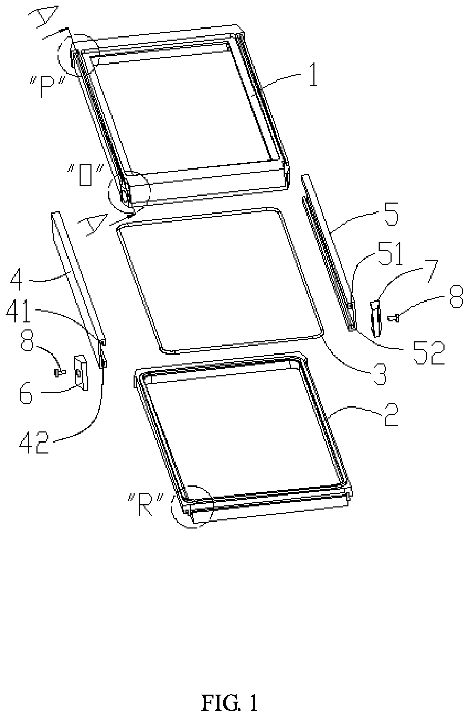

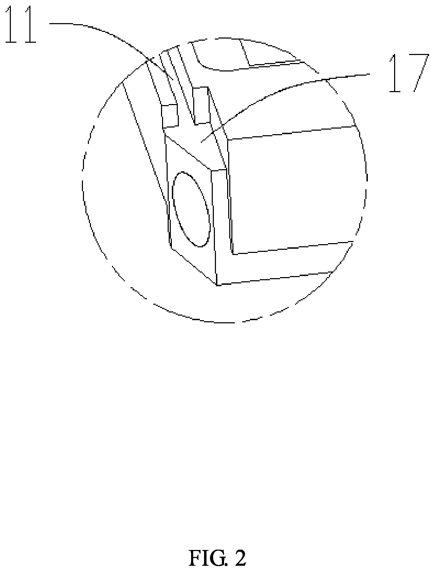

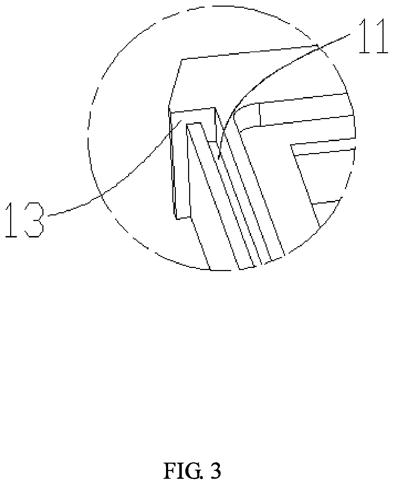

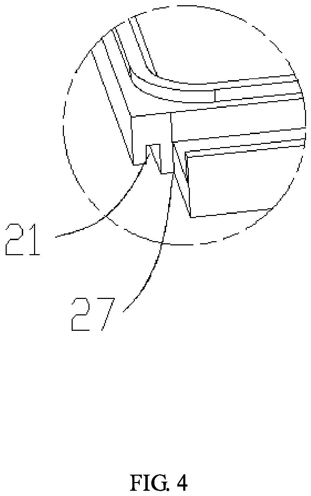

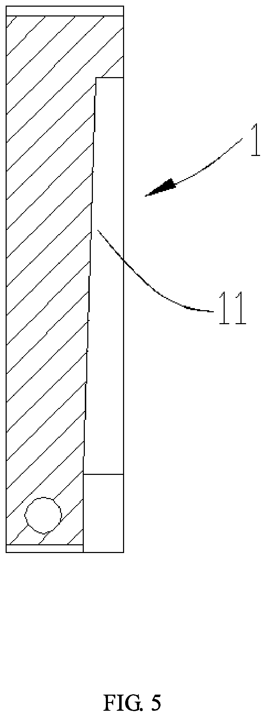

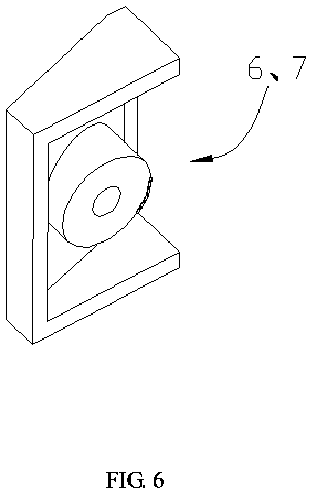

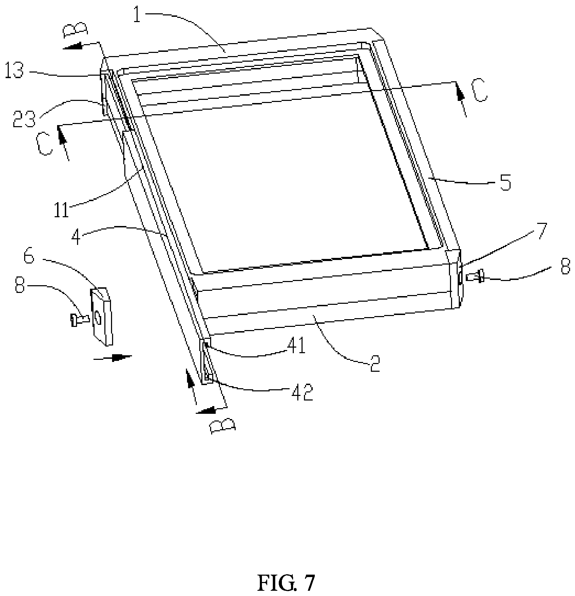

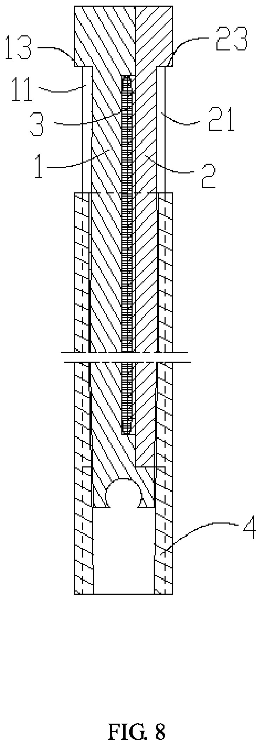

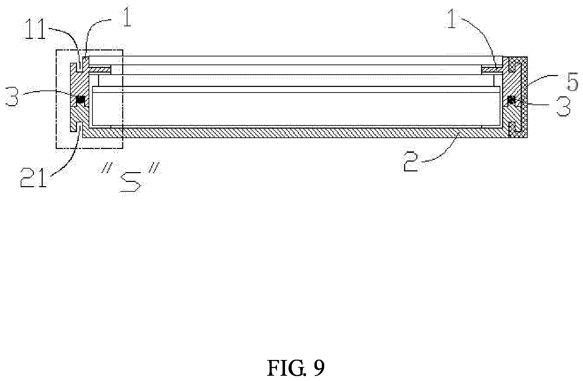

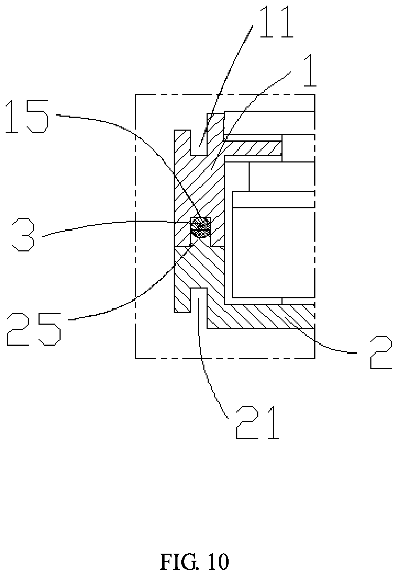

Referring to FIGs. 1-10, a waterproof structure for a mobile phone casing is shown. The waterproof structure includes a first casing 1, a second casing 2, a waterproof pad 3, two symmetrically distributed pinch strips 4, 5, two symmetrically distributed limit baffles 6, 7, and two screws 8. The first casing 1 and the second casing 2 form the casing (not labeled). The waterproof pad 3 is arranged between the first casing 1 and the second casing 2. The pinch strips 4, 5 engage with both the first casing 1 and the second casing 2, thus the first casing 1, the second casing 2, the waterproof pad 3, and the pinch strips 4, 5 are assembled together. The limit baffles 6, 7 are fixed to the first casing 1 via the screws 8. In another embodiment, the limit baffles 6, 7 are fixed to the second casing 2 via the screws 8. Two first guide grooves 11 are defined in the first casing 1 at portions adjacent to left and right sides of the first casing 1 and opposing each other. The first guide grooves 11 each includes a first end and a second end. The first ends of the first guide grooves 11 are each provided with a first limit stop 13, and the second ends of the first guide grooves 11 are each provided with a first transferee space 17. The first casing 1 further defines a groove 15. The structure of second casing 2 is similar, having second guide grooves 21 defined therein at portions adjacent to opposite left and right sides of the second casing 2 and opposing each other. The second guide grooves 21 each includes a first end and a second end. The first ends of the second guide grooves 21 are adjacent to the first ends of the first guide grooves 11 and each of the first end of second guide grooves 21 is provided with a second limit stop 23. The second ends of the second guide grooves 21 are adjacent to the second ends of the first guide grooves 11 and each of the second end of second guide grooves 21 is provided with a second transferee space 27. The second casing 2 further includes a protrusion 25 corresponding to the groove 15. Pinch strips 4, 5 are each provided with two hooks, respectively hooks 41, 42, and hooks 51, 52. Such hooks engage with the first and second guide grooves on either side of the first casing 1 and the second casing 2. In at least one embodiment, the limit baffles 6, 7 are concave housing structures. The protrusion 25 presses the waterproof pad 3 in the groove 15. One end of the pinch strip 4 abuts and is limited by one of the first limit stops 13 and one of the second limit stops 23, and another end of the pinch strip 4 is fitted with the limit baffle 6. The limit baffle 6 is fixed to the first casing 1 and extends in one of the first transferee spaces 17 and one of the second transferee spaces 27 to fit with another end of the pinch strip 4. One end of the pinch strip 5 abuts and is limited by another of the first limit stops 13 and another of the second limit stops 23, and another end of the pinch strip 5 is fitted with the limit baffle 7. The limit baffle 7 is fixed to the first casing 1 and extends in another of the first transferee space 17 and another of the second transferee space 27 to fit with another end of the pinch strip 5. The engagement of the pinch strips 4, 5 assembles and holds the first casing 1 and the second casing 2 together. The waterproof pad 3 is crushed to a certain extent, thus achieving a sealing and waterproof between the first casing 1 and the second casing 2. In the waterproof structure, the press fit between the first casing 1 and the second casing 2 is achieved by the pinch strips 4, 5 both engaging with the first casing 1 and the second casing 2, and the first casing 1 and the second casing 2 bearing a uniform pressure across and along the engagement length, ensuring that the waterproof pad 3 bears the uniform force and is uniformly deformed, thus a better waterproof effect is achieved. The limit stops 6, 7 are respectively provided at two ends of the pinch strips 4, 5, preventing disengagement between the first and second casings 1 and 2 even after a long period of use, and accordingly the mobile phone can keep a better waterproof effect for a long time. Only the limit baffles 6, 7 are required to be fixed to the first casing 1 with the screws 8, the number of screws is thus reduced. Assembly of the first casing 1 and the second casing 2 only requires engagement of the pinch strip 4 with one of the first guide grooves 11 and one of the second guide groove 21 and engagement of the pinch strip 5 with another of the first guide grooves 11 and another of the second guide grooves 21, thus screwing time is saved and the assembly efficiency is improved as compared to the related art. In addition, the waterproof effect of the related art is achieved by that a number of screw locking forces press fit a waterproof soft rubber at a number of points. Furthermore, because it is difficult to ensure that all screw locking forces are the same, it is also difficult to ensure that the screw locking forces exerted uniformly along the locking points of the screws. In contrast, the nearer to one locking point of a screw, the greater of the locking force of the screw exerted thereon, and the farther from the locking point of the screw, the less of the locking force of the screw exerted thereon. For the limitation of the casing structure, the even arrangement of the screw is difficult to achieve, thus the waterproof pad 3 is difficult to be evenly deformed, which affects the waterproof effect. In the present disclosure, the whole lateral surface of the pinch strips 4, 5 evenly engage and press fit on the first casing 1 and the second casing 2, thus ensuring even pressure on the waterproof pad 3 and the waterproof pad 3 is accordingly evenly deformed, achieving a better waterproof effect. The present disclosure, as compared to the related art, also does not need to provide positions for a number of screws fasteners between the first casing 1 and the second casing 2, only guide grooves 11 and 21 on the first and second casings 1 and 2 are required. The size of the guide grooves 11 and 21 is less than the size required to arrange a number of screws, thus a size of the casing is decreased, and accordingly a size of the mobile phone frame can be reduced.

Preferably, to ensure reliability and ease of assembly of the first casing 1 and the second casing 2, bottoms of the first guide grooves 11 and bottoms of the second guide grooves 21 of the present disclosure are sloped. Ends of the first guide grooves 11 adjacent to the limit baffles 6, 7 are deeper than ends of the first guide grooves 11 away from the limit baffles 6, 7. Correspondingly, ends of the second guide groove 21 adjacent to the limit baffles 6, 7 are deeper than ends of the second guide groove 21 away from the limit baffles 6, 7. Shapes of the two pinch strips 4, 5 correspond to those of the first guide grooves 11 and the second guide grooves 21. The pinch strips 4, 5 are pushed from the ends of the first guide grooves 11 provided with the first transferee spaces 17 and the second guide grooves 21 provided with the second transferee spaces 27 until the end of the pinch strip 4 abuts one of the first limit stops 13 and one of the second limit stops 23 and the end of the pinch strip 5 also abuts another of the first limit stops 13 and another of the second limit stops 23. When the pinch strips 4, 5 are fully engaged with the first guide grooves 11 and the second guide grooves 21, the pressure holding the first casing 1 and the second casing 2 together is the largest.

Alternatively, one of the first limit stops 13 and one of the second limit stops are respectively provided at one end of the first casing 1 and one end of the second casing 2, and another of the first limit stops 13 and the second limit stops 23 are respectively provided at another end of the second casing 1 diagonally opposite to the one end of the first casing 1 and another end of the second casing diagonally opposite to the one end of the second casing 2.

It will be appreciated that, the waterproof structure using the pinch strips 4, 5 is not limited to be applied to opposite sides of the first casing 1. A number of waterproof structures can be applied in one device, for example two such waterproof structures can be used in the first casing 1 if there are four sides. The first limit stops 13 and the second limit stops 23 are designed to be moveable according to requirements, and the limit baffles 6, 7 can be fixed. To ensure effective compromises between the functions of limiting and anti-releasing, the question of whether the limit stops and the limit baffles should be moveable or fixed can be varied and extended according to actual need.

In at least one embodiment, one of the first guide grooves 11, one of the first limit stops 13, one of the first transferee spaces 17, one of the second guide grooves 21, one of the second limit stops 23, one of the second transferee spaces 27 are respective symmetrical with another of the first guide grooves 11, another of the first limit stops 13, another of the first transferee spaces 17, another of the second guide grooves 21, another of the second limit stops 23, another of the second transferee spaces 27.

The waterproofing structure can be used in various ways, such as in mobile phones, in tablet personal computers, and the like, the waterproof products with the waterproof structure can be varied and extended under the idea of the disclosure.

The embodiments shown and described above are only examples. Even though numerous characteristics and advantages of the present technology have been set forth in the foregoing description, together with details of the structure and function of the present disclosure, the disclosure is illustrative only, and changes can be made in the detail, including in matters of shape, size, and arrangement of the parts within the principles of the present disclosure, up to and including the full extent established by the broad general meaning of the terms used in the claims.

## Claims

1. A waterproof structure (100) for a mobile phone, the waterproof structure comprising a first casing (1), a second casing (2), and a waterproof pad (3) arranged between the first casing (1) and the second casing (2); the first casing (1) comprising two opposite sides, two first guide grooves (11) being defined in the first casing (1) with one of the first guide grooves being defined at a portion of the first casing (1) adjacent to one of the opposite sides of the first casing (1) and the other of the first guide grooves being defined at another portion of the first casing (1) adjacent to the other of the opposite sides of the first casing (1);
a second casing (2) comprising two opposite sides, two second guide grooves (21) being defined in the second casing (2) with one of the second guide grooves being defined at a portion of the second casing (2) adjacent to one of the opposite sides of the second casing (2) and the other of the second guide grooves being defined at another portion of the second casing (2) adjacent to the other of the opposite sides of the second casing (2); and
two pinch strips (4, 5) engaged with the first guide grooves (11) and the second grooves (21) on either side of the first casing (1) and the second casing (2) to assemble the first casing (1), the waterproof pad (3), and the second casing (2) together,
each of the two pinch strips (4, 5) being provided with two hooks (41, 42, 51, 52) respectively corresponding to one of the first guide groove (11) and one of the second guide groove (21);
the waterproof structure being **characterized by** :
each of the first guide grooves (11) comprises a sloping bottom, and each of the second guide grooves (21) comprises a sloping bottom, and the shapes of the hooks (41, 42, 51, 52) are provided to respectively match with the shapes of the corresponding first guide grooves (11) and second guide grooves (21).

2. The waterproof structure as described in claim 1, wherein:
a first limit stop provided at an end of each of the first guide grooves, a second limit stop provided at an end of each of the second guide grooves, wherein the ends provided with the second limit stops (23) is adjacent to the ends provided with the first limit stops (13), each of pinch strip engaged with one of the first limit stops and one of second limit stops.

3. The waterproof structure as described in claim 2, wherein:
an end of each of the first guide grooves (11) adjacent to one of the first limit stops (13) and one of the second limit stops (23) is shallower than another end of each of the first guide grooves (11) away from one of the first limit stops (13) and one of the second limit stops (23), and an end of each of the second guide grooves (21) adjacent to one of first limit stops (13) and one of the second limit stops (23) is shallower than another end of the second guide groove (21) away from one of the first limit stops (13) and one of the second limit stops (23).

4. The waterproof structure (100) as described in claim 3, wherein:
one of the first limit stops (13) and one of the second limit stops (23) are respectively provided at one end of the first casing (1) and one end of the second casing (2), and the other of the first limit stops (13) and the other of the second limit stops (23) are respectively provided at another end of the first casing (1) diagonally opposite to the one end of the first casing (1) and another end of the second casing (2) diagonally opposite to the one end of the second casing (2).

5. The waterproof structure (100) as described in claim 2, wherein:
the waterproof structure (100) further comprises two limit baffles (6, 7), each limit baffle (6, 7) fits with another end of one of the pinch strips (4, 5) and is fixed to the first casing (1) or the second casing (2).

6. The waterproof structure (100) as described in claim 5, wherein:
the another end of each of the first guide grooves (11) is provided with a first transferee space (17), at the another end of each of the second guide grooves (21) is provided with a second transferee space (27), wherein the another ends being provided with the first transferee spaces (17) is adjacent to the another ends being provided with the second transferee spaces (27), each of the limit baffles (6, 7) is extended in one of the first transferee space (17) and one of the second transferee space (27) to fit with the another end of one of the pinch strips (4, 5) and is fixed to the first casing (1).

7. The waterproof structure (100) as described in claim 6, wherein:
the first casing (1) further defines a groove (15), the second casing (2) further comprises a protrusion (25) corresponding to the groove (15), the protrusion (25) presses the waterproof pad (3) in the groove (15).

8. A mobile phone (200) comprising a waterproof structure as described in any of claims 1-7.

## Patentansprüche

1. Wasserdichte Struktur (100) für ein Mobiltelefon, wobei die wasserdichte Struktur ein erstes Gehäuse (1), ein zweites Gehäuse (2) und eine wasserdichte Unterlage (3), angeordnet zwischen dem ersten Gehäuse (1) und dem zweiten Gehäuse (2), umfasst;
wobei das erste Gehäuse (1) zwei gegenüberliegende Seiten umfasst, wobei zwei erste Führungsnuten (11) in dem ersten Gehäuse (1) definiert sind, wobei eine der ersten Führungsnuten an einem Abschnitt des ersten Gehäuses (1) definiert ist benachbart zu einer der gegenüberliegenden Seiten des ersten Gehäuses (1), und wobei die andere der ersten Führungsnuten an einem anderen Abschnitt des ersten Gehäuses (1) definiert ist benachbart zu der anderen der gegenüberliegenden Seiten des ersten Gehäuses (1);
wobei das zweite Gehäuse (2) zwei gegenüberliegende Seiten umfasst, wobei zwei zweite Führungsnuten (21) in dem zweiten Gehäuse (2) definiert sind, wobei eine der zweiten Führungsnuten an einem Abschnitt des zweiten Gehäuses (2) definiert ist benachbart zu einer der gegenüberliegenden Seiten des zweiten Gehäuses (2) und wobei die andere der zweiten Führungsnuten definiert ist an einem anderen Abschnitt des zweiten Gehäuses (2), benachbart zu der anderen der gegenüberliegenden Seiten des zweiten Gehäuses (2); und
zwei Klemmleisten (4, 5) in Eingriff mit den ersten Führungsnuten (11) und den zweiten Führungsnuten (21) auf jeder Seite des ersten Gehäuses (1) und des zweiten Gehäuses (2) sind, um das erste Gehäuse (1), die wasserdichte Unterlage (3) und das zweite Gehäuse (2) zusammen zu bauen, wobei jede der zwei Klemmleisten (4, 5) mit zwei Haken (41, 42, 51, 52) bereitgestellt ist, die entsprechend einer der ersten Führungsnut (11) und einer der zweiten Führungsnut (21) entsprechen;
wobei die wasserdichte Struktur **dadurch gekennzeichnet ist, dass**:
die ersten Führungsnuten (11) einen schrägen Boden umfassen und jede der zweiten Führungsnuten (21) einen schrägen Boden umfasst und die Formen der Haken (41, 42, 51, 52) bereitgestellt sind, um entsprechend mit den Formen der entsprechenden ersten Führungsnuten (11) und zweiten Führungsnuten (21) übereinzustimmen.

2. Wasserdichte Struktur nach Anspruch 1, wobei:
ein erster Endanschlag an einem Ende von jeder der ersten Führungsnuten bereitgestellt ist, ein zweiter Endanschlag an einem Ende von jeder der zweiten Führungsnuten bereitgestellt ist, wobei die Enden, die mit den zweiten Endanschlägen (23) bereitgestellt sind, benachbart zu den Enden sind, die mit den ersten Endanschlägen (13) bereitgestellt sind, wobei jede Klemmleiste mit einem der ersten Endanschläge und einem der zweiten Endanschläge in Eingriff ist.

3. Wasserdichte Struktur nach Anspruch 2, wobei:
ein Ende von jeder der ersten Führungsnuten (11), benachbart zu einem der ersten Endanschläge (13) und einem der zweiten Endanschläge (23), flacher als ein anderes Ende von jeder der ersten Führungsnuten (11) weg von einem der ersten Endanschläge (13) und einem der zweiten Endanschläge (23) ist, und ein Ende von jeder der zweiten Führungsnuten (21), benachbart zu einem der ersten Endanschläge (13) und einem der zweiten Endanschläge (23), flacher als ein anderes Ende der zweiten Führungsnut (21) weg von einem der ersten Endanschläge (13) und einem der zweiten Endanschläge (23) ist.

4. Wasserdichte Struktur (100) nach Anspruch 3,wobei:
einer der ersten Endanschläge (13) und einer der zweiten Endanschläge (23) entsprechend an einem Ende des ersten Gehäuses (1) und einem Ende des zweiten Gehäuses (2) bereitgestellt sind, und der andere der ersten Endanschläge (13) und der andere der zweiten Endanschläge (23) entsprechend an einem anderen Ende des ersten Gehäuses (1) diagonal gegenüberliegend zu dem einen Ende des ersten Gehäuses (1) und dem anderen Ende des zweiten Gehäuses (2) diagonal gegenüberliegend zu dem einen Ende des zweiten Gehäuses (2) bereitgestellt sind.

5. Wasserdichte Struktur (100) nach Anspruch 2, wobei:
die wasserdichte Struktur (100) weiter zwei Grenzbleche (6, 7) umfasst, wobei jedes Grenzblech (6, 7) mit einem anderen Ende von einer der Klemmleisten (4, 5) passt und an dem ersten Gehäuse (1) oder dem zweiten Gehäuse (2) befestigt ist.

6. Wasserdichte Struktur (100) nach Anspruch 5, wobei:
das andere Ende von jeder der ersten Führungsnuten (11) mit einem ersten Transferbereich (17) ausgestattet ist, wobei an dem anderen Ende von jeder der zweiten Führungsnuten (21) ein zweiter Transferbereich (27) bereitgestellt ist, wobei die anderen Enden, die mit den ersten Transferbereichen (17) bereitgestellt sind, benachbart zu den anderen Enden sind, die mit den zweiten Transferbereichen (27) ausgestattet sind, wobei jedes der Grenzbleche (6, 7) in einen aus dem ersten Transferbereich (17) und einen aus dem zweiten Transferbereich (27) erstreckt ist, um mit dem anderen Ende von einer der Klemmleisten (4,5) zu passen und an dem ersten Gehäuse (1) befestigt ist.

7. Wasserdichte Struktur (100) nach Anspruch 6, wobei:
das erste Gehäuse (1) weiter eine Nut (15) definiert, das zweite Gehäuse (2) weiter einen Vorsprung (25) umfasst, der der Nut (15) entspricht, wobei der Vorsprung (25) die wasserdichte Unterlage (3) in die Nut (15) presst.

8. Mobiltelefon (200), umfassend eine wasserdichte Struktur nach einem der Ansprüche 1 - 7.

## Revendications

1. Structure étanche à l'eau (100) pour un téléphone portable, la structure étanche à l'eau comprenant une première enveloppe (1), une seconde enveloppe (2) et une plage de connexion étanche à l'eau (3) agencée entre la première enveloppe (1) et la seconde enveloppe (2) ;
la première enveloppe (1) comprenant deux côtés opposés, deux premières rainures de guidage (11) étant définies dans la première enveloppe (1), une des premières rainures de guidage étant définie au niveau d'une portion de la première enveloppe (1) adjacente à l'un des côtés opposés de la première enveloppe (1) et l'autre des premières rainures de guidage étant définie au niveau d'une autre portion de la première enveloppe (1) adjacente à l'autre des côtés opposés de la première enveloppe (1) ;
une seconde enveloppe (2) comprenant deux côtés opposés, deux secondes rainures de guidage (21) étant définies dans la seconde enveloppe (2), une des secondes rainures de guidage étant définie au niveau d'une portion de la seconde enveloppe (2) adjacente à l'un des côtés opposés de la seconde enveloppe (2) et l'autre des secondes rainures de guidage étant définie au niveau d'une autre portion de la seconde enveloppe (2) adjacente à l'autre des côtés opposés de la seconde enveloppe (2) ; et
deux bandes de pincement (4, 5) en prise avec les premières rainures de guidage (11) et les secondes rainures (21) de chaque côté de la première enveloppe (1) et de la seconde enveloppe (2) pour assembler la première enveloppe (1), la plage de connexion étanche à l'eau (3) et la seconde enveloppe (2) ensemble,
chacune des deux bandes de pincement (4, 5) étant munie de deux crochets (41, 42, 51, 52) correspondant respectivement à l'une de la première rainure de guidage (11) et à l'une de la seconde rainure de guidage (21) ; la structure étanche à l'eau étant **caractérisée par** :
chacune des premières rainures de guidage (11) comprend un fond en pente et chacune des secondes rainures de guidage (21) comprend un fond en pente et les formes des crochets (41, 42, 51, 52) sont prévues pour correspondre respectivement aux formes des premières rainures de guidage (11) et des secondes rainures de guidage (21) correspondantes.

2. Structure étanche à l'eau selon la revendication 1, dans laquelle :
une première butée de limite prévue au niveau d'une extrémité de chacune des premières rainures de guidage, une seconde butée de limite prévue au niveau d'une extrémité de chacune des secondes rainures de guidage, dans lesquelles les extrémités munies des secondes butées de limite (23) sont adjacentes aux extrémités munies des premières butées de limite (13), chaque bande de pincement étant en prise avec l'une des premières butées de limite et l'une de secondes butées de limite.

3. Structure étanche à l'eau comme décrit dans la revendication 2, dans laquelle :
une extrémité de chacune des premières rainures de guidage (11) adjacente à l'une des premières butées de limite (13) et à l'une des secondes butées de limite (23) est moins profonde qu'une autre extrémité de chacune des premières rainures de guidage (11) loin de l'une des premières butées de limite (13) et de l'une des secondes butées de limite (23), et une extrémité de chacune des secondes rainures de guidage (21) adjacente à l'une des premières butées de limite (13) et à l'une des secondes butées de limite (23) est moins profonde qu'une autre extrémité de la seconde rainure de guidage (21) loin de l'une des premières butées de limite (13) et de l'une des secondes butées de limite (23).

4. Structure étanche à l'eau (100) selon la revendication 3, dans laquelle :
l'une des premières butées de limite (13) et l'une des secondes butées de limite (23) sont respectivement prévues au niveau d'une extrémité de la première enveloppe (1) et d'une extrémité de la seconde enveloppe (2), et l'autre des premières butées de limite (13) et l'autre des secondes butées de limite (23) sont respectivement prévues au niveau d'une autre extrémité de la première enveloppe (1) diagonalement à l'opposé de l'extrémité particulière de la première enveloppe (1) et une autre extrémité de la seconde enveloppe (2) diagonalement à l'opposé de l'extrémité particulière de la seconde enveloppe (2).

5. Structure étanche à l'eau (100) selon la revendication 2, dans laquelle :
la structure étanche à l'eau (100) comprend en outre deux déflecteurs de limite (6, 7), chaque déflecteur de limite (6, 7) s'ajuste avec une autre extrémité d'une des bandes de pincement (4, 5) et est fixé à la première enveloppe (1) ou à la seconde enveloppe (2).

6. Structure étanche à l'eau (100) selon la revendication 5 dans laquelle :
l'autre extrémité de chacune des premières rainures de guidage (11) est munie d'un premier espace de réception de transfert (17), et l'autre extrémité de chacune des secondes rainures de guidage (21) est munie d'un second espace de réception de transfert (27), dans lesquelles les autres extrémités munies des premiers espaces de réception de transfert (17) sont adjacentes aux autres extrémités munies des seconds espaces de réception de transfert (27), chacun des déflecteurs de limite (6, 7) est étendu dans l'un du premier espace de réception de transfert (17) et dans l'un du second espace de réception de transfert (27) pour s'ajuster avec l'autre extrémité d'une des bandes de pincement (4, 5) et est fixé à la première enveloppe (1).

7. Structure étanche à l'eau (100) selon la revendication 6, dans laquelle :
la première enveloppe (1) définit en outre une rainure (15), la seconde enveloppe (2) comprend en outre une protubérance (25) correspondant à la rainure (15), la protubérance (25) presse la plage de connexion étanche à l'eau (3) dans la rainure (15).

8. Téléphone portable (200) comprenant une structure étanche à l'eau selon l'une quelconque des revendications 1 à 7.
